# EUROPEAN PATENT APPLICATION

(11) **EP 4 414 074 A1**
(43) Date of publication of application: **14.08.2024**
(21) Application number: 23220732.4
(22) Date of filing: 29.12.2023
(51) Int. Cl.: B01L 3/00, B01L 9/00, B01L 3/02

(54) **PRIMING DEVICE, PRIMING METHOD, AND PRIMING STATION**

(30) Priority: 13.02.2023 US 202318168122
(71) Applicant: Funai Electric Co., Ltd., Daito, Osaka, 574-0013 (JP)
(72) Inventor: CARRITHERS, Adam D., Lexington, KY, 40508 (US)
(74) Representative: Kurig, Thomas

(57) **Abstract**

A priming device (40, 160) for a fluid ejection head, a method for priming a fluid ejection head, and a priming station are provided. The priming device (40, 160) includes a Venturi tube (46, 128, 130, 132) having a motive fluid inlet (48), a suction inlet (44, 114, 116, 118) and a fluid outlet (50); a motive fluid source configured to provide a pressurized fluid to the motive fluid inlet (48) of the Venturi tube (46, 128, 130, 132) and configured to provide a reduced pressure at the suction inlet (44, 114, 116, 118) of the Venturi tube (46, 128, 130, 132); and an ejection head sealing device (58), being in fluid flow communication with an ejection head (20, 166) of a fluid cartridge (10) and the suction inlet (44, 114, 116, 118) of the Venturi tube (46, 128, 130, 132).

## Description

### TECHNICAL FIELD

The disclosure relates to fluid ejection devices and in particular to methods and apparatus for priming ejection nozzles arrays on an ejection head for a pipette-fillable fluid cartridge.

### BACKGROUND

In the medical field, in particular, there is a need for automated sample preparation and analysis. The analysis may be colorimetric analysis or require the staining of samples to better observe the samples under a microscope. Such analysis may include drug sample analysis, blood sample analysis and the like. Assay analysis of blood, for example, provides a number of different factors that are used to determine the health of an individual. When there are a large number of patients that require blood sample analysis, the procedures may be extremely time consuming. For assay analysis, such as drug screenings, it is desirable to deposit miniscule amounts of target reagents to a substrate in order to evaluate their effect and performance on the samples. Traditionally, pipettes - manually or electromechanically actuated - are used to deposit trace substances into these assay samples.

### SUMMARY

### [Technical problems]

In order to increase the speed of analysis and to handle larger quantities of samples, automated fluid dispense systems have been developed. The automated systems often require that small quantities of multiple fluids be dispensed through the use of fluid ejection heads. Thus, the fluid dispense system capable of rapidly processing large quantities of samples to be analyzed is quite elaborate and expensive.

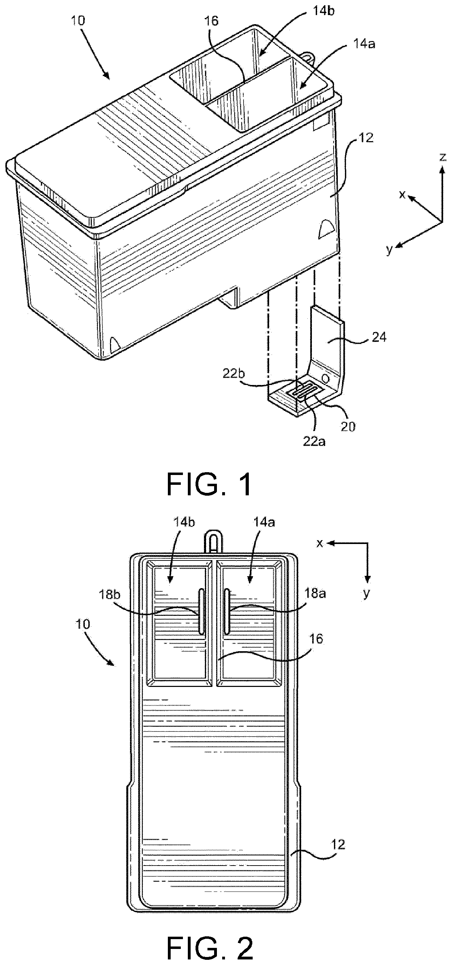

In an attempt to reduce the cost of the fluid dispense systems, a fluid ejection device has been developed that can use the configuration of a conventional inkjet printer device to process samples on glass slides or in wells of a micro-well plate. For highly individualized analysis, a pipette-fillable fluid cartridge 10 (FIG. 1) having an open top (or a hinged cover) may be used so that it can be filled with one or more analysis fluids by the user. The pipette-fillable fluid cartridge 10 includes a cartridge body 12 that may include two or more fluid storage chambers 14a and 14b separated from one another by a divider wall 16 for use with two or more different fluids. A fluid feed slot 18a and 18b is provided in each fluid storage chamber 14a and 14b respectively for flow of fluid to an ejection head 20. The ejection head 20 includes a corresponding number of nozzle arrays 22a and 22b for ejection of the fluids. The ejection head is attached to a flexible circuit 24 that provides electrical impulses for activating fluid ejection from the ejection head 20.

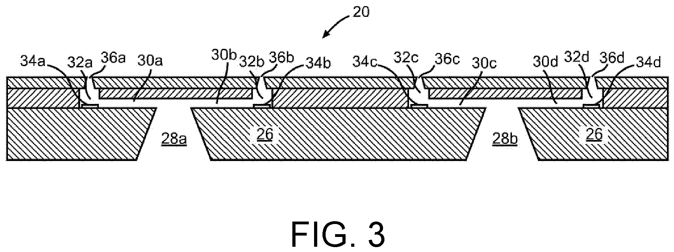

A cross-section view of a portion of an ejection head 20 having two arrays of nozzles is illustrated in FIG. 3. The ejection head 20 is provided by a semiconductor substrate 26 that includes a fluid supply vias 28 (28a and 28b) etched therethrough for fluid flow from the fluid feed slots 18a and 18b of the fluid cartridge 10, through the fluid supply vias 28a and 28b and fluid channels 30a-30d and into fluid ejection chamber 32a-32d. Upon activation of one or more fluid ejectors 34a-34d, fluid is discharged from the ejection head 20 through nozzle holes 36a-36d.

A conventional pre-filled fluid cartridge often includes a backpressure device such as a bladder or a piece of absorbent material such as foam or felt which allows a large quantity of fluid to be stored in the cartridge without the fluid drooling or dripping out of the ejection head attached to the cartridge. Due to the nature of the backpressure device, the fluid in the nozzle holes maintain a concave meniscus with respect to an external surface of the ejection head. Accordingly, it is common practice to prime the ejection head by using a negative pressure to remove air bubbles in the fluid and to pull fluid through the fluid supply via, fluid channels, and into the fluid chamber in the ejection head.

The pipette-fillable fluid cartridge 10, described above, may be filled by an end-user with a small quantity of a variety of hazardous or costly analytical reagents. It is necessary for ejection heads 20 used for analytical purposes to accommodate a wide variety of fluids that are not used in conventional pre-filled fluid cartridges. It is also necessary to reliably prime the ejection head 20 in order to dispense highly precise doses or droplets of the fluids used for such analytical purposes. However, the flow of fluid through the ejection head 20 is highly dependent upon the particular fluid parameters such as viscosity and surface tension. While priming an ejection head via vacuum is trivial when manufacturing prefilled cartridges, in biochemical and analytical applications it is desirable for the end user to fill the cartridge 10 with a custom fluid. It has been recognized that while compressed air may be found in almost every lab, a vacuum source is not always available - making priming the ejection head 20 particularly difficult for some jetting fluids. Accordingly, there is a need for a reliable priming mechanism for the pipette-fillable fluid cartridges 10 used for such analytical purposes.

### [Technical solutions]

In view of the foregoing, embodiments of the disclosure provide a priming device for a fluid ejection head. The priming device includes: a Venturi tube having a motive fluid inlet, a suction inlet and a fluid outlet; a motive fluid source, configured to provide a pressurized fluid to the motive fluid inlet of the Venturi tube and configured to provide a reduced pressure at the suction inlet of the Venturi tube; and an ejection head sealing device, being in fluid flow communication with an ejection head of a fluid cartridge and the suction inlet of the Venturi tube.

In another embodiment there is provided a method for priming a fluid cartridge. The method includes: providing a priming device for a fluid ejection head, in which the priming device includes: a Venturi tube having a motive fluid inlet, a suction inlet and a fluid outlet, a motive fluid source configured to provide a pressurized fluid to the motive fluid inlet of the Venturi tube and configured to provide a reduced pressure at the suction inlet of the Venturi tube, and an ejection head sealing device being in fluid flow communication with an ejection head of the fluid cartridge and the suction inlet of the Venturi tube; attaching the ejection head sealing device adjacent to the ejection head of the fluid cartridge; and flowing the pressurized fluid through the Venturi tube from the motive fluid inlet to the fluid outlet of the Venturi tube at a pressure and in an amount sufficient to provide a reduced pressure at the suction inlet of the Venturi tube, thereby priming the ejection head.

In another embodiment there is provided a priming station for a fluid cartridge. The priming station includes: a fluid cartridge holder, having a fluid outlet fitted with a seal, and the seal being configured to seal around a periphery of an ejection head of the fluid cartridge; and a Venturi tube, being in fluid flow communication with the fluid cartridge holder. The Venturi tube has: a suction inlet, being in fluid flow communication with the fluid outlet of the fluid cartridge holder; a motive fluid inlet of the Venturi tube, configured to provide a motive fluid through the Venturi tube and to create a reduced pressure at the suction inlet of the Venturi tube; and a Venturi tube outlet, configured to flow fluid out of the Venturi tube from the fluid cartridge holder.

In some embodiments, the motive fluid source is a compressed air source.

In some embodiments, the device includes a pressure regulator in fluid flow communication with the motive fluid inlet of the Venturi tube.

In some embodiments, a fluid sensor is associated with one or more nozzles in an array of nozzles on the ejection head, each of the one or more nozzles having a respective fluid chamber and a respective fluid channel. The fluid sensor is configured to sense liquid flow from a fluid supply via on the ejection head through the fluid channel and into the fluid chamber of the one or more nozzles, thereby indicating priming of the ejection head.

In another embodiment, a fluid sensor is disposed adjacent to the suction inlet of the Venturi tube, wherein the fluid sensor is configured to sense liquid flow from the ejection head into the Venturi tube.

In some embodiments, a controller is provided in electrical communication with the fluid sensor and the pressure regulator, wherein the controller is configured to adjust the pressure regulator to regulate the pressurized fluid from the motive fluid source.

In some embodiments, a liquid collection tank is provided in fluid flow communication with an outlet of the Venturi tube.

In some embodiments, the suction inlet of the Venturi tube is in fluid flow communication with a separate capping device for the ejection head of the fluid cartridge.

In some embodiments, a multi-port solenoid valve is disposed between the suction inlet of the Venturi tube and the ejection head, and the multi-port solenoid valve is configured to control a priming of multiple nozzle arrays on the ejection head.

In some embodiments, the pressurized fluid has a fluid inlet pressure ranging from about 0.1 to about 0.6 MPa.

In some embodiments, the pressurized fluid has a flow rate through the Venturi tube ranging from about 3 to about 10 L/min.

In some embodiments, the reduced pressure at the suction inlet of the Venturi tube ranges from about -18 to about -88 kPa.

### [Technical effects]

An advantage of the disclosed embodiments is that the priming mechanisms described herein provide an effective and efficient means of priming an ejection head of a fluid cartridge for a wide variety of fluids, particularly when a fluid cartridge is filled with a minimal amount of fluid. The apparatus and methods enable the use of open-top cartridges and/or cartridges devoid of backpressure devices thereby allowing the use of fluids selected by the user rather than the use of prefilled fluid cartridges.

### BRIEF DESCRIPTION OF THE DRAWINGS

FIG. 1 is a perspective view of a pipette-fillable cartridge for use with the priming device of the disclosure.
FIG. 2 is a top plan view of the pipette-fillable cartridge of FIG. 1.
FIG. 3 is a cross-sectional view, not to scale, of a portion of an ejection head showing two nozzle arrays.
FIG. 4 is a perspective view of a priming device according to a first embodiment of the disclosure.
FIG. 5 is a schematic view of the priming device of FIG. 4.
FIG. 6 is a partial perspective view of a cartridge holding structure for the priming device of FIG. 4.
FIG. 7 is a perspective view of the priming device of FIG. 4 including a liquid collection tank according to a second embodiment of the disclosure.
FIG. 8 is a perspective view of a priming device according to a third embodiment of the disclosure.
FIG. 9 is a schematic view of the priming device of FIG. 8.
FIG. 10 is a cross-sectional view of a priming device according to a fourth embodiment of the disclosure.
FIG. 11 is a plan view, not to scale, of a priming sequence for an array of nozzles on an ejection head using the priming device of FIG. 10.
FIGs. 12 and 13 are schematic views of a priming detection sensor according to a fifth embodiment of the disclosure.
FIG. 14 is a perspective view of a priming device according to a sixth embodiment of the disclosure.
FIG. 15 is a plan view, not to scale, of a gasket for the priming device of FIG. 14.
FIG. 16 is a top plan view of a cartridge holding structure for the priming device of FIG. 14.
FIG. 17 is a bottom cross-sectional view of the cartridge holding structure of FIG. 16.
FIG. 18 is a schematic view of a priming device according to a seventh embodiment of the disclosure.
FIG. 19 is a perspective view of a priming device according to an eighth embodiment of the disclosure.
FIG. 20 is a perspective view of a priming device according to a ninth embodiment of the disclosure.

### DETAILED DESCRIPTION OF EMBODIMENTS

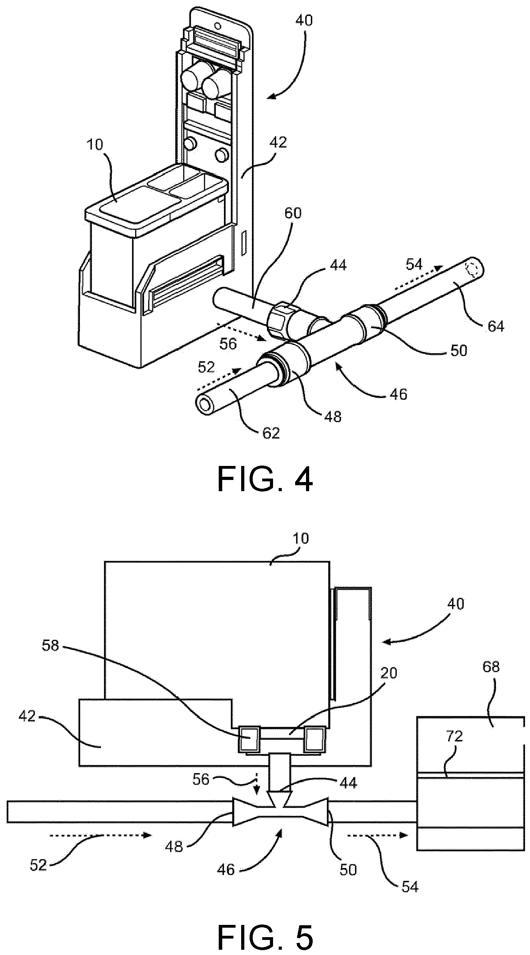

With reference to FIG. 4, there is illustrated perspective view of a priming device 40 according to a first embodiment of the disclosure. A somewhat schematic view of the priming device 40 and Venturi tube 46 is illustrated in FIG. 5. The priming device 40 includes a cartridge holding structure 42 for a pipette-fillable cartridge 10. A suction inlet 44 of a Venturi tube 46 is attached to the structure 42. The Venturi tube 46 also includes a motive fluid inlet 48 and an exhaust fluid outlet 50. A pressurized motive fluid such as compressed air or an inert gas is flowed through the Venturi tube 46 in the direction of arrows 52 and 54 from the inlet 48 to the outlet 50 to create a reduced pressure at the suction inlet 44 of the Venturi tube in the direction of arrow 56. The reduced pressure causes fluid from the ejection head 20 of the cartridge 10 to flow into and through the Venturi tube to the outlet 50 thereof. In some embodiments, the motive fluid has an inlet pressure ranging from about 0.1 to about 0.6 MPa with a flow rate through the Venturi tube ranging from about 3 to about 10 L/min. Accordingly, the motive fluid under the foregoing conditions may provide a reduced pressure at the suction inlet of the Venturi tube ranging from about -18 to about -88 kPa.

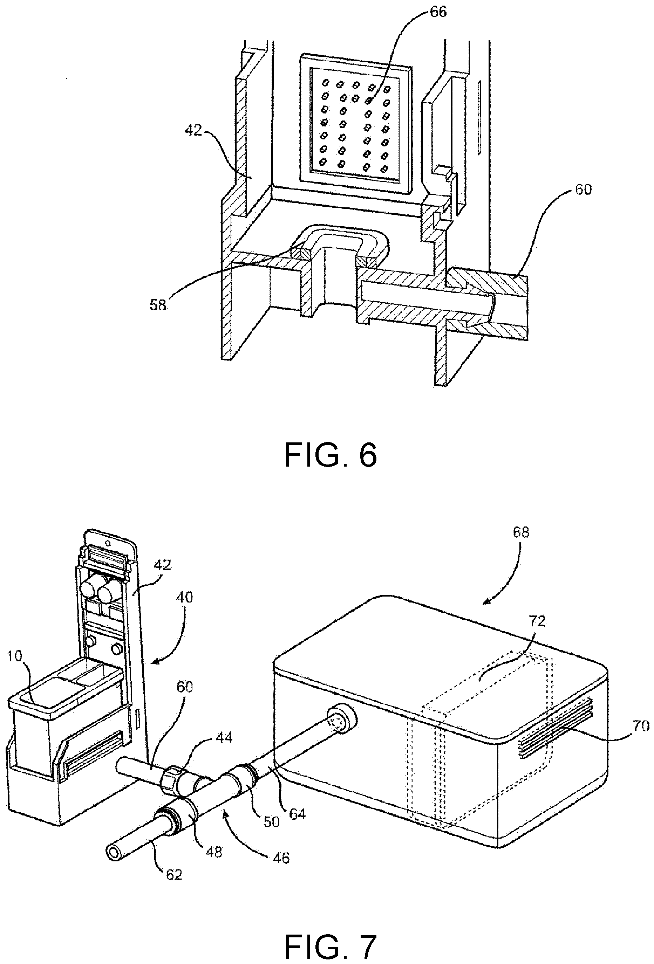

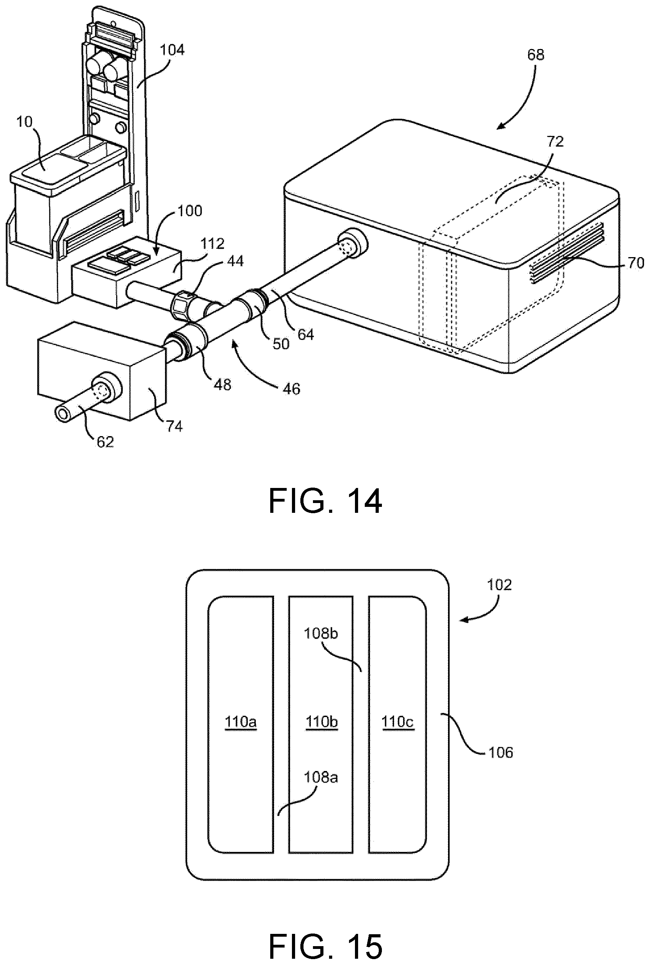

In some embodiments, a sealing device 58 such as an O-ring or a gasket is used to seal around the ejection head 20 in the structure 42 in order to prevent loss of suction from the Venturi tube 46 to the ejection head 20 as illustrated in FIG. 6, for example. The gasket 58 is made of a resilient material such as a natural or synthetic rubber and is configured to surround the periphery of the ejection head 20 when the fluid cartridge 10 is attached to the cartridge holding structure 42. More details of suitable sealing devices are described below with reference to FIG. 15.

In various embodiments illustrated herein, flexible tubing 60 may be used to connect between the suction inlet 44 of the Venturi tube 46 and the structure 42 as shown in FIGS. 4 and 6. Inlet flexible tubing 62 may also be connected to the inlet 48 and outlet flexible tubing 64 may be connected to the outlet 50 of the Venturi tube 46 as shown. In some embodiments, the flexible circuit 24 may be electrically connected to the priming device 40 by pogo pins 66 in order to activate fluid ejectors 34 on the ejection head 20 during a priming procedure by a controller (not shown).

The pipette-fillable cartridge 10 may be pre-filled and the priming device 40 used as a final step to prime the ejection head 20 or the cartridge 10 be empty and filled by a user as the priming device 40 is in use. Although spontaneous priming of the ejection head 20 is ideal, the surface tension of many fluids used for analytical purposes may be too great to allow for the initiation of capillary motion from the fluid storage chambers 14 of the cartridge 10 and through the flow features 28, 30 and 32 of the ejection head. Other fluid properties that may impact the capillary action of the fluid through the nozzle arrays 22a and 22b include, but are not limited to, viscosity, polarity, and density. Accordingly, the suction provided by the Venturi tube 46 pulls fluid from the fluid storage chamber 14 through the fluid supply vias 28 and through the fluid channels 30 into the fluid chambers 32 of the ejection head 20 thereby effectively priming the ejection head 20 for dispensing fluid. Once fluid is in the fluid chambers 32, the fluid ejectors 34 can be activated to dispense fluid through the nozzle holes 36.

In some embodiments, as shown in FIG. 7, a liquid collection tank 68 in fluid flow communication with the outlet 50 of the Venturi tube 46 may be used to collect excess fluid that may be inadvertently pulled from the ejection head 20. The liquid collection tank 68 may include vents 70 for exhausting the motive fluid and may feature filters 72, solvent traps, or other necessary means by which to prevent fluid pulled from the ejection head 20 from exiting the liquid collection tank 68.

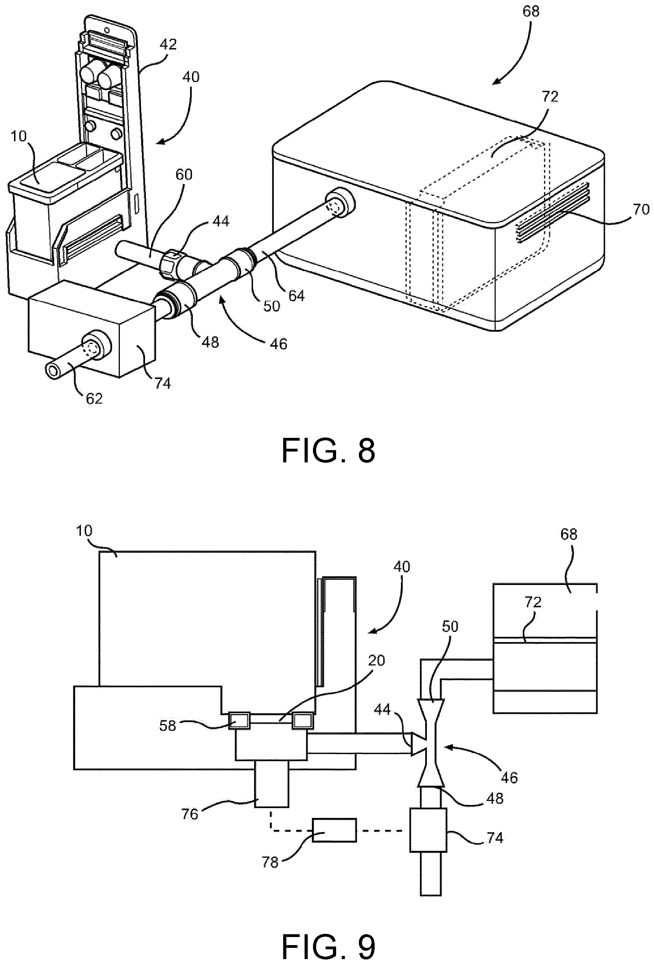

In some embodiments, as shown in FIG. 8, the priming device 40 may include pressure regulator 74 such as an electronically controlled solenoid valve on the inlet flexible tubing 62 to automatically turn on the motive air source to the motive fluid inlet 48 once the fluid cartridge 10 is properly attached to the cartridge holding structure 42 and to automatically turn off the motive air source when priming has been detected by the priming device 40.

In accordance with another embodiment, a priming detection sensor 76 may be used as shown in FIGs. 9-10 to control the solenoid valve 74 by means of a controller 78. When fluid from the ejection head 20 is sensed by the sensor 76, software in the controller 78 may be activated to close the solenoid valve 74 in order to deactivate the suction applied to the ejection head. In some embodiments, the sensor 76 is a camera 80 with a magnifying lens 82 that is mounted in the cartridge holding structure 87 below the cartridge 10 so that the ejector head 20 is visible through a viewing port 84.

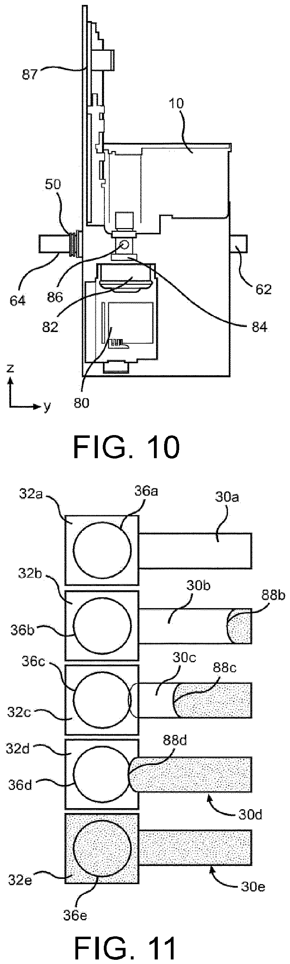

The ejection head 20 may be illuminated from below with lights 86 so that the ejection head 20 is visible through the viewing port 84. The magnifying lens 82 has a magnification that is sufficient to make the nozzles 36 clearly visible to the camera 80. Computer software may be used to identify the nozzle locations and to watch for the nozzles 36 to be primed. A proper prime of a nozzle 36 is indicated by a change in color of the nozzle 36 for any fluids containing pigments or dyes. Fluid is caused to flow from a storage chamber 14 in the fluid cartridge 10 through the feed slot 18 and into the ejection head 20 by the priming devices described herein. The fluid then flows through the fluid supply vias 28 into the fluid channels 30. For clear fluids, the computer software tracks and analyzes a leading edge of a meniscus 88b-88d of the fluid as the fluid travels through the fluid channels 30a-30e and into the fluid chamber 32e as shown in FIG. 11. Once the meniscus breaks into the fluid chamber 32e, the nozzle 36e is marked as being primed by the computer software. Once all the nozzles 36 are primed the software may provide an audible or visual signal to the user to turn off the motive fluid supply or the software may automatically terminate the supply of motive fluid using the solenoid valve 74 described above.

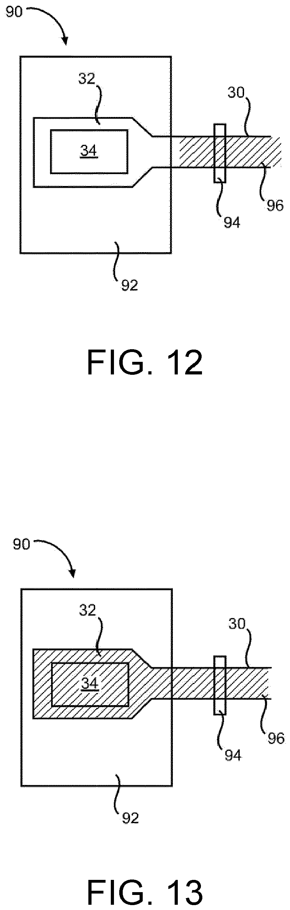

In an alternative embodiment illustrated in FIGs. 12-13, a priming detection sensor 90 may be provided for one or more nozzles 36 in an array of nozzles by at least a portion of a first electrode 92 that is disposed within the ejection chamber 32 and a second electrode 94 that is disposed within or across the fluid channel 30 as set forth in U.S. Patent No. 9,493,002 B2, U.S. Patent No. 10, 099,477 B2 and U.S. Patent No.10,717,279 B2, incorporated herein by reference. According to this embodiment, the first electrode 92 is configured to receive a step voltage. A sense circuit is electrically connected to the second electrode 94 that generates an output based on the application of the step voltage to the first electrode 92. When fluid 96 successfully enters the fluid chamber 32 from the fluid channel as shown in the sequence of FIGs. 12-13, the conductivity of the fluid 96 establishes an electrical connection between the first electrode 92 and the second electrode 94, thereby indicating the successful priming of the nozzle 36 associated with the fluid chamber 32. The cartridge 10 may have a priming detection sensor 90 associated with a single nozzle 36 for each fluid supply via or may have multiple priming detection sensors 90 spread across a plurality of nozzles 36 in an array of nozzles 22. Once the priming of all nozzles 36 is detected for a given nozzle array, a logic board in electrical communication with the detection sensor 90 can signal to the controller 78 to automatically terminate the supply of motive fluid using the solenoid valve 74 as described above. An advantage of the foregoing embodiment is that the priming detection sensor 90 is situated so as to determine the priming of the nozzles 36 while the fluid remains in the ejection head 20. This is particularly useful for expensive or messy fluids being dispensed by the ejection head 20 in order to reduce waste and mess.

In an embodiment illustrated in FIGs. 14-17, a multi-port solenoid valve (MPSV) 100 may be used to selectively prime multiple nozzle arrays on an ejection head using a gasket 102 on the cartridge holding structure 104 that is used to seal between the nozzle arrays. The gasket 102 (FIG. 15) includes a periphery 106 that is sufficient to seal around the entire ejection head 20 and separators 108a and 108b that seal between adjacent nozzle arrays on the ejection head. Opening areas 110a, 110b and 110c in the gasket 102 enable the flow of fluid from the ejection head 20 to the Venturi tube 46. In this embodiment, the MPSV 100 has an outlet side 112 connected to the suction inlet 44 of the Venturi tube 46. The opposite side of the MPSV 100 has multiple suction inlets 114, 116, and 118 connected to the cartridge holding structure 104 to provide fluid pathways for priming multiple nozzle arrays. Each suction inlet 114, 116, and 118 corresponds to an associated passageway 120, 122 and 124 in the cartridge holding structure 104 that is in fluid flow communication with the open areas 110a, 110b and 110c.

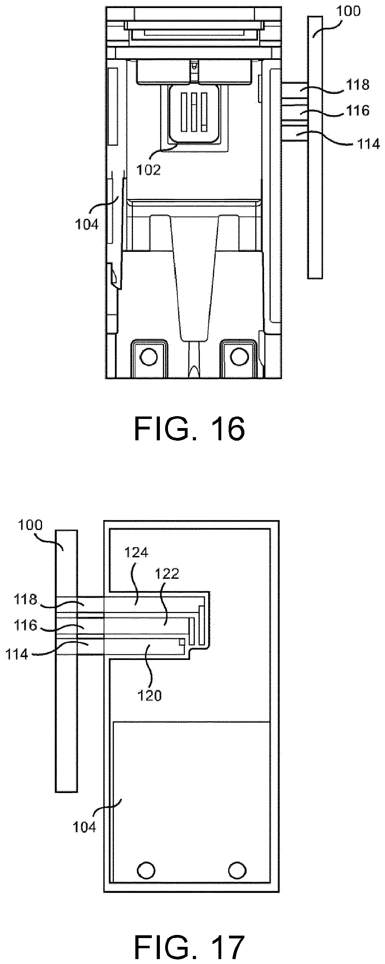

Accordingly, the MPSV 100 may be operated or programmed to provide suction to any one of the open areas 110a, 110b, or 110c in the gasket 102, or may provide suction to two or more of the open areas 110a, 110b, or 110c. For example, if the ejection head has a single nozzle array, then the MPSV 100 may provide suction only to area 110b of the gasket 102 through passageway 122 and suction inlet 116 (FIG. 16). If the ejection head has two nozzle arrays, then the MPSV 100 may be used to provide suction through areas 110a and 110c of the gasket through passageways 120 and 124 and suction inlets 114 and 118 (FIG. 17). The two nozzle arrays may be primed simultaneously or sequentially in any order. Likewise, if the ejection head has three nozzle arrays, then the MPSV 100 may be used to prime the nozzle arrays sequentially in any order, in combination of two nozzle arrays, or simultaneously all three nozzle arrays using open areas 110a, 110b, and 110c of the gasket 102 and passageways 120, 122, and 124 in the cartridge holding structure 104.

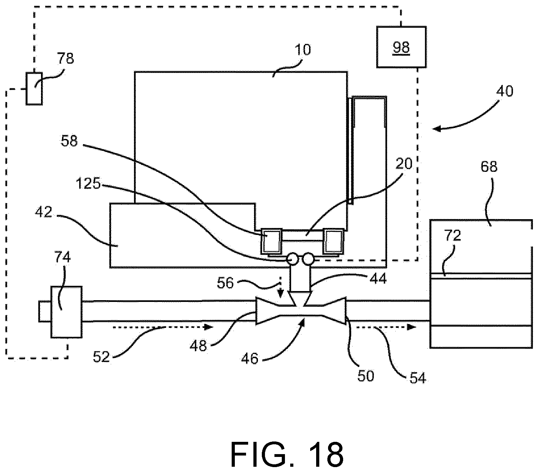

In another embodiment illustrated in FIG. 18, a fluid detection sensor 125 may be used for inexpensive fluids. In this embodiment, the fluid detection sensor 125, resembling the fluid detection sensor 90 (described above) having sensing electrodes may be added to the cartridge holding structure 42 or 104. Fluid flowing from the ejection head 20 caused by operation of the Venturi tube 46 may fill the one or more open areas 1 10a-1 10c of the gasket 102 and complete a circuit between the sensing electrodes. Each open area 1 10a-1 10c of the gasket 102 may be associated with a set of electrodes in order to determine if one or nozzle arrays have been primed and to terminate the motive fluid when priming is detected.

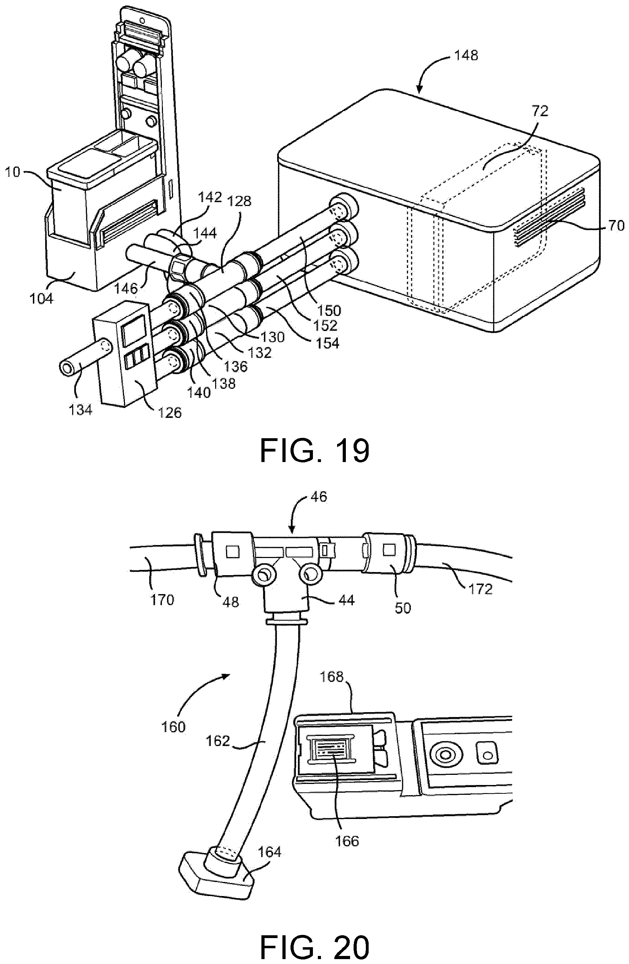

In order to prevent the MPSV from being contaminated by fluid pulled from the ejection head during a priming sequence, a multi-port solenoid valve (MPSV) 126 may be used to provide motive fluid individually, or in combination to Venturi tubes 128, 130 and 132 as illustrated in FIG. 19. In this embodiment, the motive fluid is provided to the MPSV 126 through inlet tubing 134. The MPSV 126 can be programmed to provide motive fluid to the inlets 136, 138, and 140 of the Venturi tubes 128, 130, and 132, thereby providing suction on the passageways 120, 122, and 124 in the cartridge holding structure 104 through flexible tubing 142, 144, and 146 in order to prime multiple nozzle arrays as described above. The MPSV 126 can be electronically controlled by the logic board 98 once priming has been sensed. Any fluid flowing from the ejection head through the nozzle arrays may be directed into the liquid collection tank 148 through flexible tubing 150, 152, and 154 connected to the Venturi tubes 128, 130 and 132, respectively.

In another embodiment as illustrated in FIG. 20, a simplified priming device 160 using a single Venturi tube 46 may be used to prime an ejection head of a fluid cartridge. The Venturi tube 46 includes a suction inlet 44 that is connected to a flexible tubing 162 that terminates with a capping device 164 that is configured to seal an ejection head 166 of a fluid cartridge 168. The capping device 164 may be a molded plastic or metal structure that contains a sealing material (not shown) as described above to seal around the ejection head 166. Motive fluid is provided to the inlet 48 of the Venturi tube 46 through flexible tubing 170. The motive fluid flows through the Venturi tube along with any fluid pulled from the ejection head 166 and out through exit 50 and flexible tubing 172 to a disposal area or to a collection tank as described above.

All of the embodiments described above provide an efficient and useful method for priming an ejection head when a source of vacuum is not available. The devices are particularly useful for priming ejection heads on user-filled cartridges such as pipette-fillable cartridges used for a variety of applications where pre-filled fluid cartridges cannot be used. While the various embodiments described above contemplate a Venturi tube external to the cartridge holding structure, it will be appreciated that the Venturi tube may be built into the cartridge holding structure at least in embodiments shown in FIGs. 4-5, 7-8 and 18.

For the purposes of this specification and appended claims, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that can vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques.

While particular embodiments have been described, alternatives, modifications, variations, improvements, and substantial equivalents that are or can be presently unforeseen can arise to applicants or others skilled in the art. Accordingly, the appended claims as filed and as they can be amended are intended to embrace all such alternatives, modifications, variations, improvements, and substantial equivalents.

## Claims

1. A priming device (40, 160) for a fluid ejection head, **characterized in that** comprising:
a Venturi tube (46, 128, 130, 132) having a motive fluid inlet (48), a suction inlet (44, 114, 116, 118) and a fluid outlet (50);
a motive fluid source, configured to provide a pressurized fluid to the motive fluid inlet (48) of the Venturi tube (46, 128, 130, 132) and configured to provide a reduced pressure at the suction inlet (44, 114, 116, 118) of the Venturi tube (46, 128, 130, 132); and
an ejection head sealing device (58), being in fluid flow communication with an ejection head (20, 166) of a fluid cartridge (10) and the suction inlet (44, 114, 116, 118) of the Venturi tube (46, 128, 130, 132).

2. The priming device (40, 160) of claim 1, wherein
the motive fluid source comprises a compressed air source.

3. The priming device (40, 160) of claim 1, further comprising:
a pressure regulator (74), being in fluid flow communication with the motive fluid inlet (48) of the Venturi tube (46, 128, 130, 132).

4. The priming device (40, 160) of claim 3, further comprising:
a fluid sensor (90), being associated with one or more nozzles (36) in an array of nozzles on the ejection head (20, 166),
each of the one or more nozzles (36) having a respective fluid chamber (32) and a respective fluid channel (30),
the fluid sensor (90) being configured to sense liquid flow from a fluid supply via (28, 28a, 28b) on the ejection head (20, 166) through the fluid channel (30) and into the fluid chamber (32) of the one or more nozzles (36), thereby indicating priming of the ejection head (20, 166).

5. The priming device (40, 160) of claim 4, further comprising:
a controller (78), being in electrical communication with the fluid sensor (90) and the pressure regulator (74),
the controller (78) being configured to adjust the pressure regulator (74) to regulate the pressurized fluid from the motive fluid source.

6. The priming device (40, 160) of claim 1, further comprising:
a liquid collection tank (68, 148), being in fluid flow communication with an outlet of the Venturi tube (46, 128, 130, 132).

7. The priming device (40, 160) of claim 1, wherein
the suction inlet (44, 114, 116, 118) of the Venturi tube (46, 128, 130, 132) is in fluid flow communication with a separate capping device (164) for the ejection head (166) of the fluid cartridge (168).

8. The priming device (40, 160) of claim 1, further comprising:
a multi-port solenoid valve (100, 126), being disposed between the suction inlet (44, 114, 116, 118) of the Venturi tube (46, 128, 130, 132) and the ejection head (20, 166),
wherein the multi-port solenoid valve (100, 126) is configured to control a priming of multiple nozzle arrays (22a, 22b) on the ejection head (20, 166).

9. A method for priming a fluid cartridge (10), **characterized in that** comprising:
providing a priming device (40, 160) for a fluid ejection head, comprising:
a Venturi tube (46, 128, 130, 132) having a motive fluid inlet (48), a suction inlet (44, 114, 116, 118) and a fluid outlet (50),
a motive fluid source, configured to provide a pressurized fluid to the motive fluid inlet (48) of the Venturi tube (46, 128, 130, 132) and configured to provide a reduced pressure at the suction inlet (44, 114, 116, 118) of the Venturi tube (46, 128, 130, 132), and
an ejection head sealing device (58), being in fluid flow communication with an ejection head (20, 166) of the fluid cartridge (10) and the suction inlet (44, 114, 116, 118) of the Venturi tube (46, 128, 130, 132);
attaching the ejection head sealing device (58) to the ejection head (20, 166) of the fluid cartridge (10); and
flowing the pressurized fluid through the Venturi tube (46, 128, 130, 132) from the motive fluid inlet (48) to the fluid outlet (50) of the Venturi tube (46, 128, 130, 132) at a pressure and in an amount sufficient to provide the reduced pressure at the suction inlet (44, 114, 116, 118) of the Venturi tube (46, 128, 130, 132), thereby priming the ejection head.

10. The method of claim 9, wherein
the pressurized fluid has a fluid inlet pressure ranging from about 0.1 to about 0.6 MPa.

11. The method of claim 9, wherein
the pressurized fluid has a flow rate through the Venturi tube (46, 128, 130, 132) ranging from about 3 to about 10 L/min.

12. The method of claim 9, wherein
the reduced pressure at the suction inlet (44, 114, 116, 118) of the Venturi tube (46, 128, 130, 132) ranges from about -18 to about -88 kPa.

13. The method of claim 9, further comprising:
collecting a fluid suctioned from the ejection head (20, 166) in a collection tank (68, 148) in fluid flow communication with the fluid outlet (50) of the Venturi tube (46, 128, 130, 132).

14. The method of claim 9, wherein
the fluid cartridge (10) comprises a pipette fillable cartridge,
wherein the method further comprises: inserting fluid in the pipette fillable cartridge before attaching the ejection head sealing device (58) to the ejection head (20, 166) of the fluid cartridge (10).

15. A priming station for a fluid cartridge (10), **characterized in that** comprising:
a fluid cartridge holder (42, 104), having a fluid outlet (50) fitted with a seal (58, 102), and the seal (102) being configured to seal around a periphery of an ejection head (20, 166) of the fluid cartridge (10); and
a Venturi tube (46, 128, 130, 132), being in fluid flow communication with the fluid cartridge holder (42, 104), the Venturi tube (46, 128, 130, 132) comprising:
a suction inlet (44, 114, 116, 118), being in fluid flow communication with the fluid outlet (50) of the fluid cartridge holder (42, 104);
a motive fluid inlet (48) of the Venturi tube (46, 128, 130, 132), configured to provide a motive fluid through the Venturi tube (46, 128, 130, 132) and to create a reduced pressure at the suction inlet (44, 114, 116, 118) of the Venturi tube (46, 128, 130, 132); and
a Venturi tube outlet (50), configured to flow fluid out of the Venturi tube (46, 128, 130, 132) from the fluid cartridge holder (42, 104).

16. The priming station of claim 15, further comprising:
a pressure regulator (74), being in fluid flow communication with the motive fluid inlet (48) of the Venturi tube (46, 128, 130, 132).

17. The priming station of claim 16, further comprising:
a fluid sensor (90), being adjacent to the fluid outlet (50) of the fluid cartridge holder (42, 104),
the fluid sensor (90) being configured to sense liquid flow from the ejection head (20, 166) through the fluid outlet (50) of the fluid cartridge holder (42, 104).

18. The priming station of claim 17, further comprising:
a controller (78), being in electrical communication with the fluid sensor (90) and the pressure regulator (74),
the controller (78) being configured to adjust the pressure regulator (74) to regulate a pressure of the motive fluid applied to the motive fluid inlet (48) of the Venturi tube (46, 128, 130, 132).

19. The priming station of claim 15, further comprising:
a liquid collection tank (68, 148), being in fluid flow communication with the Venturi tube outlet (50).

20. The priming station of claim 15, further comprising:
a multi-port solenoid valve (100, 126), being disposed between the suction inlet (44, 114, 116, 118) of the Venturi tube (46, 128, 130, 132) and the fluid outlet (50) of the fluid cartridge holder (42, 104),
the multi-port solenoid valve (100, 126) being configured to control a priming of multiple nozzle arrays (22a, 22b) on the ejection head (20, 166).
